# EUROPÄISCHE PATENTSCHRIFT

(11) **EP 0 785 367 B1**
(45) Veröffentlichungstag und Bekanntmachung des Hinweises auf die Patenterteilung: **12.04.2000**
(21) Anmeldenummer: 96100619.4
(22) Anmeldetag: 17.01.1996
(51) Int. Cl.: F16C 29/04, F16C 33/56, F16C 31/04

(54) **Lager**
Bearing
Palier

(43) Veröffentlichungstag der Anmeldung: 23.07.1997
(73) Patentinhaber: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(56) Entgegenhaltungen:
- DE-B- 1 068 955
- DE-C- 959 699
- FR-A- 2 066 169
- FR-A- 2 233 522
- US-A- 4 492 415

## Beschreibung

Die Erfindung betrifft ein Lager gemäß dem Oberbegriff des Patentanspruchs 1.

Derartige Lager, wie z.B. aus der DE-A-1 068 955 bekanntgewordene dienen zur drehbaren und zugleich axial beweglichen Lagerung von zylindrischen Bauteilen und werden beispielsweise in Kraftfahrzeuggetrieben zur Lagerung von Schaltwellen, Schaltstangen und dergleichen eingesetzt. Typischerweise wird ein solches Lager durch eine zylindrische Hülse aus gehärtetem Stahl gebildet, die einen hohlzylindrischen Kugelkäfig aus Kunststoff aufnimmt, in dessen Wand eine Vielzahl von auf dem Umfang und auf der Länge verteilten Kugeln so gehalten sind, daß ein Wälzlager für die durch das Innere der Hülse und des Kugelkäfigs verlaufende Welle gebildet wird. Die Innenfläche der Hülse bildet eine verschleißfeste Lauffläche für die Kugeln. Die Länge des Kugelkäfigs entspricht annähernd der Hälfte der Länge der Hülse, so daß sich der Kugelkäfig in Längsrichtung der Hülse bewegen kann, wenn die Kugeln am Umfang der Welle und an der Lauffläche der Hülse abrollen. Die Hülse ist an beiden Enden mit Bördelrändern versehen, die Anschläge für die entgegengesetzten axialen Endlagen des Kugelkäfigs bilden.

Bei den bekannten Lagern dieser Art unterscheidet man zwei Bauformen. Bei einer Bauform besitzt der Kugelkäfig eine in Umfangsrichtung durchgehende Wand, so daß er sich nicht radial zusammendrücken läßt. Die Hülse muß deshalb zunächst an einem Ende offen sein, damit der Kugelkäfig in die Hülse eingeführt werden kann. Die Hülse wird nach dem Härten am offenen Ende wieder angelassen, damit das Material sich nach dem Einsetzen des Kugelkäfigs umbördeln läßt. Diese Bauform erfordert somit bei der Herstellung einen relativ hohen Arbeitsaufwand und hat außerdem den Nachteil, daß der umgebördelte Rand an mindestens einem Ende der Hülse ungehärtet bleibt, so daß er leicht beschädigt werden kann.

Bei der zweiten Bauform, die dem Oberbegriff des Anspruchs 1 zugrunde liegt, ist der Kugelkäfig in Längsrichtung geschlitzt, so daß er sich etwas zusammendrücken und in die Hülse einklipsen laßt, nachdem diese bereits an beiden Enden mit Bördelrändern versehen worden ist. Diese Bauform hat deshalb den Vorteil, daß die Hülse vor dem Einsetzen des Kugelkäfigs an beiden Enden umgebördelt und dann gehärtet werden kann, so daß beide Bördelränder aus gehärtetem Material bestehen. Da das nachträgliche Anlassen eines Endes der Hülse entfällt, wird eine rationellere Fertigung ermöglicht.

Bei dieser Bauform darf allerdings der Bördelrand zumindest an einem Ende der Hülse nur wenig radial nach innen vorspringen, damit eine ausreichende lichte Weite für das nachträgliche Einsetzen des Kugelkäfigs bestehen bleibt. Wenn später die zu lagernde Welle durch das Lager gesteckt wird, kann es vorkommen, daß der Kugelkäfig mit der Welle wieder aus der Hülse herausgedrückt wird.

Aufgabe der Erfindung ist es, ein Lager nach dem Oberbegriff des Patentanspruchs 1 zu schaffen, bei dem der Käfig auch beim Einsetzen des zu lagernden Bauteils sicher in der Hülse gehalten wird.

Diese Aufgabe wird erfindungsgemäß mit den in Patentanspruch 1 angegebenen Merkmalen gelöst.

Erfindungsgemäß ist der Bördelrand an mindestens einem Ende der Hülse gegenüber derem Mantel um mehr als 90° abgewinkelt, so daß die Innenfläche des radial vorspringenden Bördelrandes nicht rechtwinklig zur Achse der Hülse verläuft, sondern leicht konisch in das Innere der Hülse zurückspringt. Das zugehörige Ende des Kugelkäfigs bildet im äußeren Umfangsbereich einen Innenkonus. Wenn beim Einsetzen der Welle das konische Ende des Kugelkäfig gegen den gleichfalls konischen Bördelrand gedrückt wird, so gleiten die Konusflächen aufeinander auf und haben die Tendenz, den Kugelkäfig radial aufzuweiten. Hierdurch wird zuverlässig verhindert, daß der geschlitzte Kugelkäfig beim Auftreffen auf den Bördelrand nach innen nachgibt und aus der Hülse herausgedrückt wird.

Vorteilhafte Ausgestaltungen der Erfindung ergeben sich aus den Unteransprüchen.

Im folgenden wird ein bevorzugtes Ausführungsbeispiel anhand der Zeichnung näher erläutert.

Es zeigen:
- Fig. 1: einen schematischen Längsschnitt einer erfindungsgemäßen Lagerhülse;
- Fig. 2: eine Stirnansicht des Lagers nach Figur 1; und
- Fig. 3: eine Detailvergrößerung zu Figur 1.

Das Lager weist eine zylindrische Hülse 10 aus gehärtetem Stahl auf, in die ein hohlzylindrischer Kugelkäfig 12 aus Kunststoff eingesetzt ist. In dem Kugelkäfig 12 sind Kugeln 14 gehalten, die an der Innenfläche der Hülse 10 abrollen und ein Wälzlager für eine nicht gezeigte Welle bilden, die durch das Innere des Kugelkäfigs 12 hindurchläuft. Die Länge des Kugelkäfigs 12 entspricht etwa der Hälfte der Länge der Hülse 10, so daß sich der Kugelkäfig in Axialrichtung in der Hülse bewegen kann. Die Hülse 10 ist an beiden Enden mit nach innen vorspringenden Bördelrändern 16 versehen, die den axialen Bewegungsbereich des Kugelkäfigs begrenzen.

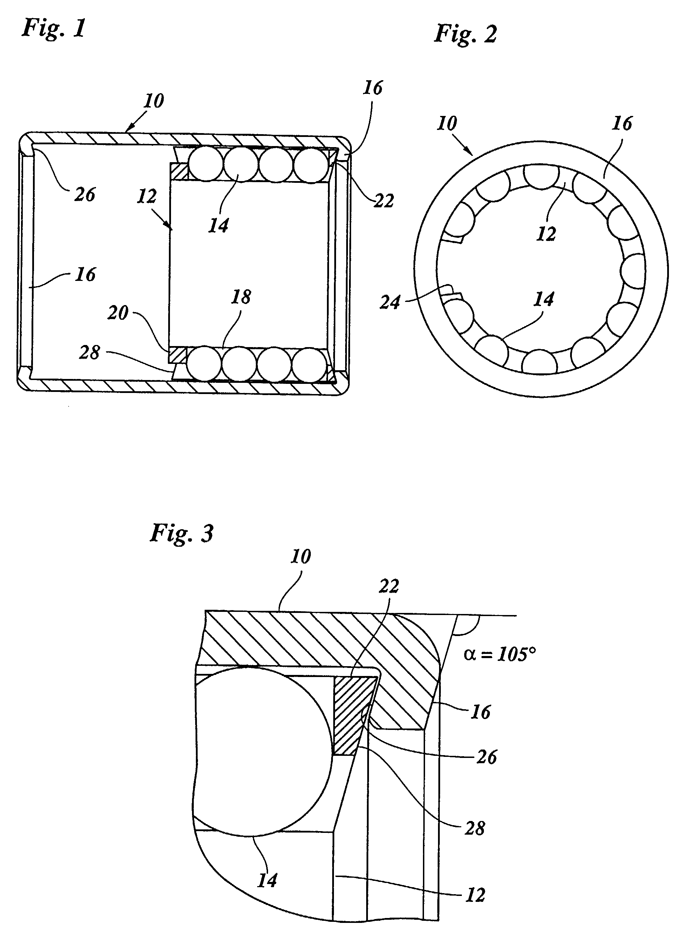

Die Wand des Kugelkäfigs 12 ist auf ihrem gesamten Umfang mit axial verlaufenden Schlitzen 18 versehen, die jeweils mehrere der Kugeln 14 aufnehmen. Die Schlitze 18 werden an einem Ende des Kugelkäfigs, links in Figur 1, durch einen durchgehenden Bund 20 am inneren Umfang des Kugelkäfigs und am entgegengesetzten Ende durch einen durchgehenden Bund 22 am äußeren Umfang des Kugelkäfigs begrenzt. Dies gestattet es, den Kugelkäfig 12 einschließlich der Schlitze 18 im Spritzgießverfahren mit axial auseinanderfahrenden Formwerkzeugen herzustellen. Die Schlitze 18 besitzen einen Querschnitt, der sich in Radialrichtung sowohl nach innen als auch nach außen verengt, so daß die Kugeln 14 formschlüssig in Position gehalten werden.

Wie aus Figur 2 hervorgeht, ist der hohlzylindrische Kugelkäfig 12 an einer Stelle seines Umfangs durch einen in Längsrichtung durchgehenden Schlitz 24 unterbrochen. Dies gestattet es, den Kugelkäfig elastisch zusammenzudrücken. Hierdurch ist es möglich, den Außendurchmesser des Kugelkäfigs vorübergehend so weit zu verringern, daß er sich durch die durch den Bördelrand 16 begrenzte verengte Öffnung der Hülse 10 hindurch in die Hülse einführen läßt. Vorzugsweise ist der Kugelkäfig 12 in unbelastetem Zustand etwas aufgeweitet, so daß er nach dem Einsetzen in die Hülse 10 elastisch zurückfedert und dann unter leichter Vorspannung an der Innenfläche der Hülse anliegt.

Wie am deutlichsten in Figur 3 zu erkennen ist, springen die Bördelränder 16 in Axialrichtung etwas in das Innere der Hülse 10 zurück. Der Winkel a, um den der Bördelrand 16 in bezug auf den Mantel der Hülse 10 abgewinkelt ist, beträgt im gezeigten Beispiel etwa 105°. Die Innenfläche 26 des Bördelrandes bildet folglich einen Außenkonus. Das an diesem Außenkonus anliegende Ende des Kugelkäfigs 12, speziell die Stirnfläche des Bundes 22, bildet einen zu dem Außenkonus komplementären Innenkonus 28. Wenn der Kugelkäfig 12 an dem Bördelrand 16 anschlägt, bewirken folglich die konische Innenfläche 26 des Bördelrandes und der Innenkonus 28 eine Aufweitung des Kugelkäfigs, das heißt, eine Verbreiterung des Schlitzes 24. Auf diese Weise wird der Kugelkäfig sicher in der Hülse 10 zurückgehalten.

Im gezeigten Beispiel haben die Bördelränder 16 an beiden Enden der Hülse 10 dieselbe Gestalt, und auch die Stirnfläche des Kugelkäfigs 12 außerhalb des Bundes 20 bildet einen (durch die Schlitze 18 unterbrochenen) Innenkonus 28. Es wäre jedoch auch denkbar, einen der Bördelränder 16 weiter radial nach innen vorspringen zu lassen.

Bei einem praktischen Ausführungsbeispiel hat die Hülse 10 einen Außendurchmesser von 23 mm und eine Wanddicke von 1,0 mm. Der Innendurchmesser der durch die Bördelränder 16 begrenzten Öffnungen beträgt in diesem Fall 19,5 mm. Die Vorkraglänge, um die der Bördelrand 16 von der Innenfläche der Hülse 10 vorspringt, beträgt somit nur 0,75 mm. Aufgrund der Abwinklung des Bördelrandes um mehr als 90° und des Innenkonus 28 an dem Kugelkäfig genügt dies jedoch, den Kugelkäfig sicher in Position zu halten.

Das Lager kann auf rationelle Weise hergestellt werden, indem zunächst die Hülse 10 an beiden Enden mit den Bördelrändern 16 versehen und dann als Ganzes gehärtet wird. Danach wird der mit den Kugeln 14 bestückte Kugelkäfig unter Ausnutzung des Schlitzes 24 vorübergehend zusammengedrückt und durch eines der verengten Enden der Hülse 10 hindurch in die Hülse eingeklipst.

Die Breite der Schlitze 24 ist in Figur 2 etwas übertrieben dargestellt. In der Praxis ist der Schlitz so bemessen, daß der Außendurchmesser des Kugelkäfigs auch dann noch größer ist als die durch die Bördelränder 16 begrenzte Öffnung, wenn der Schlitz 24 vollständig geschlossen ist und die Enden der Wand des Kugelkäfigs stumpf aufeinanderstoßen. Um den Außendurchmesser während des Einklipsens des Kugelkäfigs in die Hülse weiter zu verringern, gibt man dem Kugelkäfig eine spiralförmige Gestalt, so daß die den Schlitz 24 bildenden Enden einander etwas überlappen.

Abweichend von dem beschriebenen Ausführungsbeispiel könnte anstelle des Kugelkäfigs 12 beispielsweise auch Nadelkäfig vorgesehen sein.

## Patentansprüche

1. Lager mit einer zylindrischen, an mindestetens einem Ende nach innen umgebördelten Hülse (10) aus gehärtetem Stahl und einem in die Hülse eingeklipsten Wälzkörper-Käfig (12) aus Kunststoff, der die Form eines längsgeschlitzten Hohlzylinders hat, dadurch **gekennzeichnet**, daß der Bördelrand (16) an mindestens einem Ende der Hülse (10) gegenüber deren Mantel um mehr als 90° abgewinkelt ist und daß das entsprechende Ende des Käfigs (12) zumindest im äußeren Umfangsbereich einen Innenkonus (28) bildet.

2. Lager nach Anspruch 1, dadurch **gekennzeichnet**, daß die Bördelränder (16) an beiden Enden der Hülse (10) um mehr als 90° abgewinkelt sind und beide Enden des Käfigs (12) einen Innenkonus (28) aufweisen.

3. Lager nach Anspruch 1 oder 2, dadurch **gekennzeichnet**, daß der Bördelrand (16) mit der Verlängerung der Mantelfläche der Hülse (10) einen Winkel zwischen 100° und 110° bildet.

4. Lager nach einem der vorstehenden Ansprüche, dadurch **gekennzeichnet**, daß die Vorkraglänge des Bördelrandes (16) gegenüber der Innenfläche des Mantels der Hülse (10) weniger als 1,5 mm, vorzugsweise weniger als 0,8 mm beträgt.

## Claims

1. A bearing having a cylindrical sleeve (10) flanged inwardly at one end at least and made from hardened steel and a rolling bearing cage (12) made from plastic material and snapped into the sleeve, which cage has the shape of a longitudinally slit hollow cylinder,
**characterised in that** the flanged edge (16) is bent by more than 90° at one end at least of the sleeve (10) in relation to its surface
**and in that** the corresponding end of the ball bearing cage (12) forms an internal cone (28) at least in the external peripheral region.

2. A bearing according to Claim 1,
**characterised in that** the flanged edges (16) are bent by more than 90° at both ends of the sleeve (10) and both ends of the ball bearing cage (12) have an internal cone (28).

3. A bearing according to Claim 1 or 2,
**characterised in that** the flanged edge (16) forms an angle of between 100° and 110° with the extension of the surface of the sleeve (10).

4. A bearing according to one of the preceding Claims,
**characterised in that** the projecting length of the flanged edge (16) from the inner face of the surface of the sleeve (10) is less than 1.5 mm, preferably less than 0.8 mm.

## Revendications

1. Palier comprenant un manchon cylindrique (10) en acier trempé rabattu vers l'intérieur à au moins une extrémité et une cage à corps de révolution (12) en matière plastique qui est clipsée dans le manchon et qui possède la forme d'un cylindre creux à fente longitudinale, caractérisé en ce que le bord rabattu (16) à au moins une extrémité du manchon (10) est coudé à plus de 90° par rapport à la surface périphérique de ce dernier, et en ce que l'extrémité correspondante de la cage (12) forme, au moins dans la zone circonférentielle extérieure, un cône intérieur (28).

2. Palier selon la revendication 1, caractérisé en ce que les bords rabattus (16) aux deux extrémités du manchon (10) sont coudés à plus de 90°, et les deux extrémités de la cage (12) comportent un cône intérieur (28).

3. Palier selon la revendication 1 ou 2, caractérisé en ce que le bord rabattu (16) forme, avec le prolongement de la surface périphérique du manchon (10), un angle compris entre 100° et 110°.

4. Palier selon une des revendications précédentes, caractérisé en ce que la longueur de débordement du bord rabattu (16) par rapport à la face intérieure de la surface périphérique du manchon (10) est inférieure à 1,5 mm, de préférence inférieure à 0,8 mm.
